(19) Europäisches Patentamt
European Patent Office
Office européen des brevets

(11) **EP 3 835 844 B1**

(12) **EUROPEAN PATENT SPECIFICATION**

(45) Date of publication and mention
of the grant of the patent:
**13.07.2022   Bulletin 2022/28**

(21) Application number: **20213617.2**

(22) Date of filing: **11.12.2020**

(51) International Patent Classification (IPC):
**G02B 13/00** *(2006.01)*        **G02B 13/04** *(2006.01)*
**G02B 13/06** *(2006.01)*

(52) Cooperative Patent Classification (CPC):
**G02B 13/004; G02B 13/04; G02B 13/06**

(54) **OPTICAL IMAGING LENS AND IMAGING DEVICE**

**OPTISCHE BILDGEBUNGSLINSE UND BILDGEBUNGSVORRICHTUNG**

**LENTILLE D'IMAGERIE OPTIQUE ET DISPOSITIF D'IMAGERIE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2019   CN 201911273397**

(43) Date of publication of application:
**16.06.2021   Bulletin 2021/24**

(73) Proprietor: **Jiangxi Lianchuang Electronic Co.,
Ltd.
Nanchang, Jiangxi 330096 (CN)**

(72) Inventors:
• **ZHANG, Xinyue
Nanchang, Jiangxi 330096 (CN)**
• **WANG, Kemin
Nanchang, Jiangxi 330096 (CN)**

• **ZENG, Jiyong
Nanchang, Jiangxi 330096 (CN)**

(74) Representative: **Lin Chien, Mon-Yin
Gloria Fuertes 1, 2° D
28340 Valdemoro Madrid (ES)**

(56) References cited:
**CN-U- 209 327 661        JP-A- 2015 011 050
US-A1- 2014 153 116        US-A1- 2019 361 207**

• **Herbert Gross ET AL: "Handbook of Optical
Systems, Vol.3: Aberration Theory and
Correction of Optical Systems" In: "Handbook of
optical systems, Aberration theory and
correction of optical systems", 1 January 2007
(2007-01-01), Wiley-VCH, Weinheim, DE,
XP055258161, ISBN: 978-3-527-40379-0 pages
377-379, * the whole document ***

**Description**

TECHNICAL FIELD

The present disclosure relates to the field of lens imaging technologies, and more particularly, to an optical imaging lens and an imaging device.

BACKGROUND

With the development of autonomous driving assistance systems and the increase in market demand, many countries such as China, Europe, America, and Japan have successively promulgated relevant policies to promote the development of autonomous driving, which has greatly promoted the development of autonomous driving related industries. As a key component of autonomous driving assistance systems, vehicle camera lenses are also undergoing rapid development. Meanwhile, requirements for vehicle camera lenses are updated. For example, the size and the front diameter are required to be smaller, and the total length is also required to be shorter. The requirements for the optical performance of the vehicle camera lens not only include sufficient resolution, but also include a larger aperture to increase the luminous flux of incident lights, thereby realizing high resolution and clear imaging in dark external environments. In addition, the working environment for the vehicle camera lens is also harsh. The vehicle camera lens is required to have good thermal stability and can maintain a good resolution even in high and low temperature environments. The vehicle camera lens is also required to have a certain level of waterproof and anti-fog performance, it should have a certain protection ability in rain, snow, hail and haze weather to reduce the effect on the image quality.

CN209327661U discloses an imaging lens. From an object side to an image plane along an optical axis, the optical imaging lens sequentially includes: a first lens, a second lens, a third lens and a fourth lens. The first lens has a negative refractive power, and an object side surface of the first lens is concave. The second lens has a positive or negative refractive power. The third lens has a positive or negative refractive power, an object side surface of the third lens is convex and an image side surface of the third lens is concave. The fourth lens has a positive refractive power. There is an air spacing between two adjacent lenses, and an effective focal length f1 of the first lens and an effective focal length f4 of the fourth lens satisfy the following expression: -1.3<f4/f1<0.

SUMMARY

The object of the disclosure is to provide an optical imaging lens and an imaging device, having advantages of miniaturization, large aperture, high imaging quality, and good thermal stability, and capable of imaging at night and in dark environments and capable of normally working in bad weather. The invention is set out in the appended set of claims.

In the disclosure, the first lens adopts a concave lens with a negative refractive power, it can effectively reduce the distortion of the lens on one hand, and can receive more light into an optical system on the other hand, thereby increasing the luminous flux of incident lights. The second lens adopts a convex lens with a positive refractive power, which is conducive to eliminate aberrations. By reducing a distance between the first lens and the second lens, it facilitates to collect incident lights and eliminate aberrations. By providing a large aperture stop, it can collect more incident lights. By setting the stop between the second lens and the third lens, it can effectively reduce a front diameter of the optical imaging lens. The third lens adopts a meniscus lens with a positive refractive power, which can increase the distance between the second lens and the third lens and is conducive to increase an image height of the field. The first lens and the third lens surround the second lens, a cross section of the image side surface of the first lens and the object side surface of the third lens is in an approximately symmetrical concentric structure, which can effectively correct the distortion. The fourth lens adopts an aspheric lens, on one hand, it can effectively eliminate aberrations of the optical system, correct the distortion and improve the resolution of the optical imaging lens; on the other hand, it can reduce the number of lenses in the optical system and reduce an incident angle of the chief ray on a photosensitive element surface of a chip. The third lens and the fourth lens are very close, a distance therebetween is very small, even less than 0.5mm. The image side surface of the third lens and the object side surface of the fourth lens are in an approximately symmetrical structure with an externally tangent circle shape, which can effectively increase the maximum image height of the optical system. Meanwhile, the lenses included in the optical imaging lens are all glass lenses. Compared with other optical materials, the glass material has better thermal stability, is capable of maintaining good resolution in high and low temperature environments, and can improve the protective ability of the optical imaging lens and meet the requirements of working in harsh environments.

BRIEF DESCRIPTION OF THE DRAWINGS

FIG. 1 is a schematic structural diagram of an optical imaging lens according to a first embodiment of the disclosure.
FIG. 2 is a diagram showing field curvature curves of the optical imaging lens according to the first embodiment of the disclosure.
FIG. 3 is a diagram showing distortion curves of the optical imaging lens according to the first embodiment of the disclosure.
FIG. 4 is a diagram showing axial chromatic aberration of the of the optical imaging lens according to the first embodiment of the disclosure.
FIG. 5 is a schematic structural diagram of an optical imaging lens according to a second embodiment of the disclosure.
FIG. 6 is a diagram showing field curvature curves of the optical imaging lens according to the second embodiment of the disclosure.
FIG. 7 is a diagram showing distortion curves of the optical imaging lens according to the second embodiment of the disclosure.
FIG. 8 is a diagram showing axial chromatic aberration of the of the optical imaging lens according to the second embodiment of the disclosure.
FIG. 9 is a schematic structural diagram of an imaging device according to a third embodiment of the disclosure.

Reference numerals of main components:

| Optical imaging lens | 100, 200 | Imaging device | 300 |
|---|---|---|---|
| First lens | L1 | Second lens | L2 |
| Stop | ST | Third lens | L3 |
| Fourth lens | L4 | Filter | G1 |
| Object side surface of the first lens | S1 | Image side surface of the first lens | S2 |
| Object side surface of the second lens | S3 | Image side surface of the second lens | S4 |
| Object side surface of the third lens | S5 | Image side surface of the third lens | S6 |
| Object side surface of the fourth lens | S7 | Image side surface of the fourth lens | S8 |
| Object side surface of the filter | S9 | Image side surface of the filter | S10 |
| Image plane | S11 | Image sensor | 310 |

DETAILED DESCRIPTION OF PREFERRED EMBODIMENTS

In order to facilitate the understanding of the disclosure, the disclosure will be described more fully hereinafter with reference to the accompanying drawings. Several embodiments of the disclosure are illustrated in the drawings. These embodiments are provided to make the disclosure more thorough and comprehensive.

Unless defined otherwise, all technical and scientific terms used herein have the same meaning as commonly understood by one of ordinary skill in the art to which this invention belongs. The terminology used herein in the description of the present invention is only for the purpose of describing specific embodiments, and is not intended to limit the present disclosure. The term "and/or" as used herein includes any and all combinations of one or more of the associated listed items.

Embodiments of the disclosure provide an optical imaging lens. The optical imaging lens includes a first lens, a second lens, a stop, a third lens, a fourth lens, and a filter, from an object side to an image plane along an optical axis. The first lens has a negative refractive power, and an object side surface and an image side surface of the first lens are both concave. The second lens has a positive refractive power, and an object side surface and an image side surface of the second lens are both convex. The stop is disposed between the second lens and the third lens. The third lens has a positive refractive power, and an object side surface of the third lens is concave, and an image side surface of the third lens is convex. The fourth lens has a positive refractive power, an object side surface and an image side surface of the fourth lens are both convex. The first lens, the second lens and the third lens are glass spherical lenses, and the fourth lens is a glass aspheric lens. The optical imaging lens meets the expression: $4.0 < TTL/ImgH < 4.4$, where TTL represents a total optical length of the optical imaging lens, ImgH represents half of the maximum diameter of an effective pixel area of the image plane of the optical imaging lens. Satisfying the above expression can achieve a large image plane while limiting the total optical length of the optical imaging lens, thereby making the optical imaging lens has characteristics of miniaturization and light weight.

In the disclosure, the first lens adopts a concave lens with a negative refractive power, it can effectively reduce the distortion of the lens on one hand, and can receive more light into an optical system on the other hand, thereby increasing the luminous flux of incident lights. The second lens adopts a convex lens with a positive refractive power, which is conducive to eliminate aberrations. By reducing a distance between the first lens and the second lens, it facilitates to collect incident lights and eliminate aberrations. By providing a large aperture stop, it can collect more incident lights. By setting the stop between the second lens and the third lens, it can effectively reduce the front diameter of the optical imaging lens. The third lens adopts a meniscus lens with a positive refractive power, which can increase the distance between the second lens and the third lens and is conducive to increase an image height of the field. The first lens and the third lens surround the second lens, a cross section of the image side surface of the first lens and the object side surface of the third lens is in an approximately symmetrical concentric shape, which is beneficial to effectively correct the distortion. The fourth lens adopts an aspheric lens, on one hand, it can effectively eliminate aberrations of the optical system, correct the distortion and improve the resolution of the optical imaging lens; on the other hand, it can reduce the number of lenses in the optical system and reduce an incident angle of the chief ray on a photosensitive element surface of a chip. The third lens and the fourth lens are very close, a distance therebetween is very small, even less than 0.5mm. The image side surface of the third lens and the object side surface of the fourth lens are in an approximately symmetrical structure with an externally tangent circle shape, which can effectively increase the maximum image height of the optical system.

Meanwhile, the lenses included in the optical imaging lens are all glass lenses. Compared with other optical materials, the glass material has better thermal stability, is capable of maintaining good resolution in high and low temperature environments, and can improve the protective ability of the optical imaging lens and meet the requirements of working in harsh environments.

In some examples, the optical imaging lens meets the expression:

$$0.2 < S1/TTL < 0.3; \tag{1}$$

where S1 represents a distance from the center of the object side surface of the first lens to the stop, TTL represents the total optical length of the optical imaging lens. Satisfying the expression (1), can realize a forward movement of the stop. The forward movement of the stop can give enough space for the optical system after the stop, which is beneficial to eliminate aberrations on the image plane.

In some examples not part of the claimed subject-matter, the optical imaging lens meets the expressions:

$$1.8 < f6/EFL < 2.1; \tag{2}$$

$$2.4 < f7/EFL < 3.2; \tag{3}$$

where f6 represents a focal length of the image side surface of the third lens, f7 represents a focal length of the object side surface of the fourth lens, EFL represents an effective focal length of the optical imaging lens.

Satisfying the expressions (2) and (3), can ensure that the image side surface of the third lens and the object side surface of the fourth lens form an arc-shaped structure approximately circumscribed. Such a structure is conducive to bend and limit the large-angle light. In a lens design with a simple structure, it can effectively reduce the number of lenses after the stop, thereby reducing size and cost of the optical imaging lens.

The optical imaging lens meets the expression:

$$0.5 < D1/D7 < 1; \tag{4}$$

where D1 represents an effective diameter of the object side surface of the first lens, and D7 represents an effective diameter of the object side surface of the fourth lens. Satisfying the expression (4) can effectively reduce the front diameter of the optical imaging lens, thereby effectively reducing the size of the optical imaging lens.

In some examples, the optical imaging lens meets the expression:

$$0.1 < TTL/|R1| < 0.5; \tag{5}$$

where R1 represents a radius of curvature of the object side surface of the first lens, and TTL represents the total optical length of the optical imaging lens. Satisfying the expression (5) can change a relative position of a ghost pupil image on a focal plane, wherein the ghost pupil image is caused by the object side surface of the first lens secondarily reflecting the ghost. By controlling the absolute value of the radius of curvature, the ghost pupil image can be kept away from the focal plane, thereby effectively reducing the relative energy value of the ghost and improving the quality of images formed by the optical imaging lens.

In some examples, in order to ensure that the optical imaging lens has a sufficient field of view and increase an observation range of the optical imaging lens, the optical imaging lens meets the expression:

$$140° < FOV < 160°; \tag{6}$$

where FOV represents the maximum field of view of the optical imaging lens.

In some examples, the optical imaging lens meets the expression:

$$CRA < 13°; \tag{7}$$

where CRA represents an incident angle of the chief ray of the maximum field of view on the image plane. Satisfying the expression (7) is beneficial for a photosensitive element to receive light signals, so that a brightness of a central portion of the formed image and the brightness of a peripheral portion of the formed imaged are uniformly transitioned.

In some examples, the optical imaging lens meets the expression:

$$20 < TTL/CT1 < 35; \tag{8}$$

where CT1 represents a center thickness of the first lens on the optical axis, and TTL represents the total optical length of the optical imaging lens. Meeting the expression (8) can increase MTF values of the center of the optical imaging lens. By reducing the center thickness of the first lens, it is beneficial to reduce an optical path difference between the paraxial ray of the central field of view and the marginal ray of the pupil, thereby increasing the resolution of the center of the optical imaging lens.

In some examples, the optical imaging lens meets the expression:

$$7 < TTL/T23 < 12; \tag{9}$$

where T23 represents a distance between the second lens and the third lens along the optical axis, and TTL represents the total optical length of the optical imaging lens. Satisfy the expression (9), when the distance between the second lens and the third lens is increased, a rear portion of the optical system is kept relatively far away from the stop, lights from the object side with different FOVs are converged and pass through an aperture of the stop at a certain divergence angle, and then may converged at a farther position, thereby increasing the image height.

In some examples, the optical imaging lens meets the expression:

$$40 < (V1+V3+V4)/3 < 60; \tag{10}$$

where V1 represents a coefficient of dispersion of the first lens, V3 represents a coefficient of dispersion of the third lens, and V4 represents a coefficient of dispersion of the fourth lens. Satisfying the expression (10), the first lens, the third lens and the fourth lens should be made of materials with high Abbe number and low dispersion, so as to achieve the purpose of eliminating chromatic aberrations of the optical system.

In some examples, the optical imaging lens meets the expression:

$$|\phi 8|_{max} \leq 16°; \tag{11}$$

where $|\Phi8|_{max}$ represents the maximum value of a dip angle of the image side surface of the fourth lens, the dip angle represents an included angle between the horizontal direction and the tangent of an outer surface of the fourth lens.

Satisfying the expression (11), aberrations of margin fields of the optical imaging lens can be optimized to be smaller, also the CRA can be reduced accordingly.

In some examples, the optical imaging lens meets the expression:

$$-12° \leqslant |\Phi7|-\arctan[SD7/(R7^2 - SD7^2)^{1/2}] \leqslant 12° ; \tag{12}$$

where $|\Phi7|$ represents the value of a dip angle of the object side surface of the fourth lens at effective semi-aperture, the dip angle represents an included angle between the horizontal direction and the tangent of an outer surface of the fourth lens, SD7 represents the effective semi-aperture of the object side surface of the fourth lens, R7 represents a radius of curvature of the object side surface of the fourth lens.

Meeting the expression (12) makes a change trend of the refractive power of the fourth lens, from the center to the margin, is similar to the sine and cosine function. As such, under high and low temperature changes, defocus curves of all fields are more converged, which is beneficial to improve the temperature performance of the optical imaging lens.

In some examples, the optical imaging lens meets the expression:

$$RD4>RD3>RD2; \tag{13}$$

where RD2 represents an effective diameter of the second lens, RD3 represents an effective diameter of the third lens, and RD4 represents an effective diameter of the fourth lens. Shapes of aspherical surfaces of the optical imaging lens of every embodiment meet the expression:

$$z = \frac{ch^2}{1+\sqrt{1-(1+K)c^2h^2}} + Bh^4 + Ch^6 + Dh^8 + Eh^{10} + Fh^{12},$$

where z represents a vector height between a position on the surface and a vertex of the surface along an optical axis of the lens, c represents a curvature of the vertex of the surface, K is a quadratic surface coefficient, h is a distance between the position on the surface and the optical axis, B is a fourth order surface coefficient, C is a sixth order surface coefficient, D is an eighth order surface coefficient, E is a tenth order surface coefficient, F is a twelfth order surface coefficient.

In each of the following embodiments, the thickness, the radius of curvature, and the material of each lens in the optical imaging lens are different. Details can be referred to parameter tables provided in the following embodiments.

EMBODIMENT 1

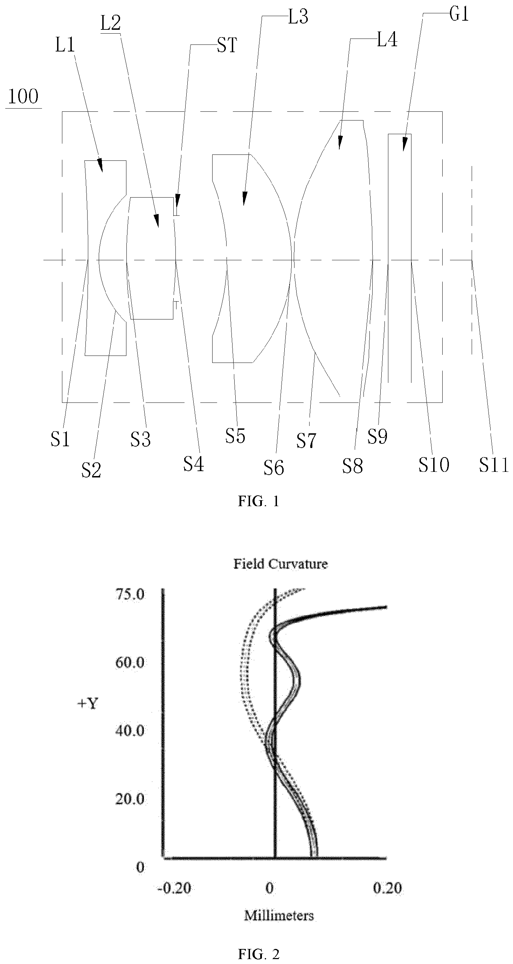

FIG. 1 illustrates a structural diagram of an optical imaging lens 100, according to a first embodiment of the disclosure. From an object side to an image plane, the infrared optical imaging lens sequentially includes a first lens L1, a second lens L2, a stop ST, a third lens L3, a fourth lens L4, and a filter G1.

The first lens L1 has a negative refractive power, and an object side surface S1 and an image side surface S2 of the first lens L1 are both concave.

The second lens L2 has a positive refractive power, and an object side surface S3 and an image side surface S4 of the second lens L2 are both convex.

The stop ST is disposed between the second lens L2 and the third lens L3.

The third lens L3 has a positive refractive power, and an object side surface S5 of the third lens L3 is concave, and an image side surface S6 of the third lens L3 is convex.

The fourth lens L4 has a positive refractive power, an object side surface S7 and an image side surface S8 of the fourth lens L4 are both convex.

The first lens L1, the second lens L2 and the third lens L3 are glass spherical lenses, and the fourth lens L4 is a glass aspheric lens.

Relevant parameters of every lens included in the optical imaging lens 100 are shown in Table 1.

Table 1

| Surface No. | Surface type | Radius of curvature (mm) | Thickness (mm) | Refractive index | Abbe number |
|---|---|---|---|---|---|
| Object surface | | Infinity | Infinity | | |
| S1 | Spherical surface | -66.301101 | 0.446708 | 1.52 | 64.2 |
| S2 | Spherical surface | 2.904686 | 1.071768 | | |
| S3 | Spherical surface | 17.735922 | 1.869838 | 2.00 | 25.4 |
| S4 | Spherical surface | -12.736279 | -0.039758 | | |
| ST | | Infinity | 2.009601 | | |
| S5 | Spherical surface | -7.178100 | 2.504982 | 1.83 | 42.7 |
| S6 | Spherical surface | -5.075150 | 0.070607 | | |
| S7 | Aspheric surface | 6.730563 | 4.773657 | 1.81 | 40.9 |
| S8 | Aspheric surface | -21.215689 | 0.629037 | | |
| S9 | | Infinity | 0.900000 | 1.52 | 64.2 |
| S10 | | Infinity | 2.320180 | | |
| S11 | | Infinity | | | |

In this embodiment, parameters of aspherical lenses included in the optical imaging lens 100 are shown in Table 2.

Table 2

| Surface No. | K | B | C | D | E | F |
|---|---|---|---|---|---|---|
| S7 | -6.314170E-01 | 3.483369E-04 | -1.079487E-04 | 5.689030E-06 | -2.116927E-07 | 1.645523E+09 |
| S8 | 4.990177E+00 | 1.967712E-03 | -1.374212E-04 | 8.430350E-06 | -4.129637E-07 | 8.067695E+09 |

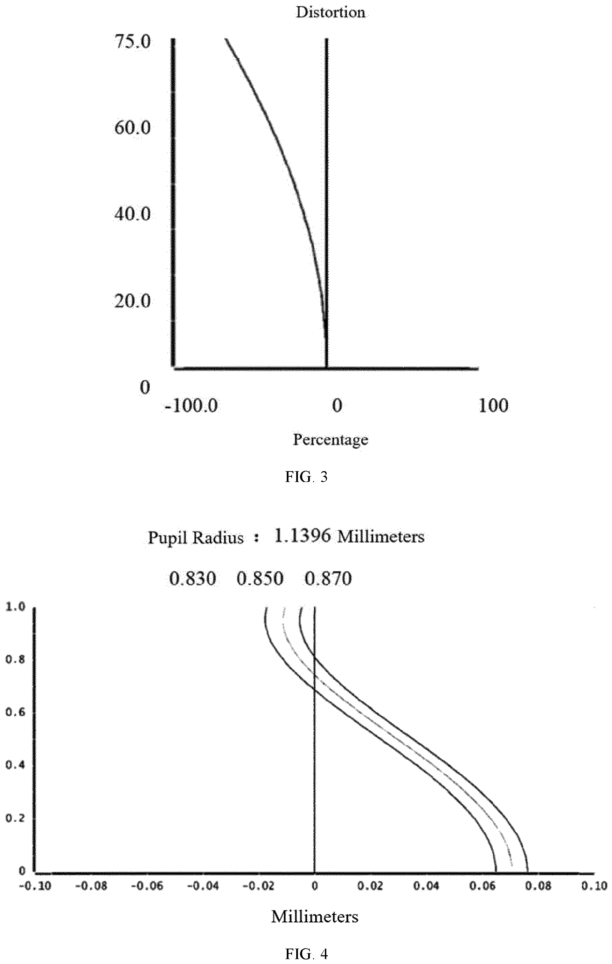

In this embodiment, curves of field curvature, distortion, and axial chromatic aberration of the optical imaging lens 100 are shown in FIG. 2, FIG. 3, and FIG. 4, respectively. In particular, three curves illustrated in FIG. 4, from the negative axis direction to the positive axis direction, respectively correspond to the axial chromatic aberration curves of the optical imaging lens 100 at the wavelength of 830 nm, 850 nm, and 870 nm. From FIG. 2 to FIG. 4, it is apparent that the field curvature, the distortion, and the axial chromatic aberration can be well corrected.

EMBODIMENT 2

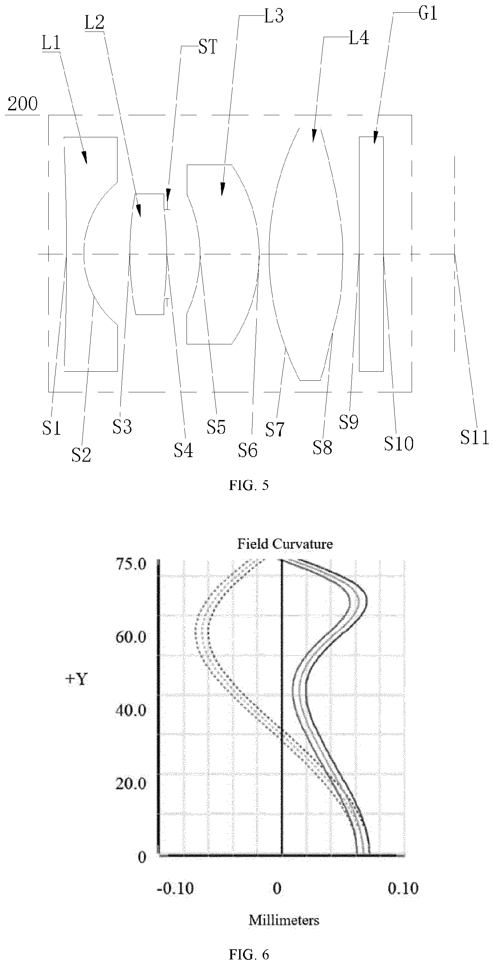

FIG. 5 illustrates a structural diagram of an optical imaging lens 200 according to a second embodiment of the disclosure. The structure of the optical imaging lens 200 provided in this embodiment is substantially the same to the structure of the optical imaging lens 100 provided in the first embodiment, except that: a radius of curvature, a thickness and a material of each lens included in the optical imaging lens 200 are different.
Related parameters of each lens included in the optical imaging lens 200 are shown in Table 3.

Table 3

| Surface No. | Surface type | Radius of curvature (mm) | Thickness (mm) | Refractive index | Abbe number |
|---|---|---|---|---|---|
| Object surface | | Infinity | Infinity | | |
| S1 | Spherical surface | -100.000000 | 0.699998 | 1.52 | 64.2 |
| S2 | Spherical surface | 3.124318 | 1.774908 | | |
| S3 | Spherical surface | 11.249569 | 1.426101 | 1.83 | 42.7 |
| S4 | Spherical surface | -11.975064 | -0.022616 | | |
| ST | | Infinity | 1.297551 | | |
| S5 | Spherical surface | -4.520917 | 2.301246 | 1.80 | 46.6 |
| S6 | Spherical surface | -5.144493 | 0.348857 | | |
| S7 | Aspheric surface | 7.812390 | 2.834006 | 1.81 | 40.9 |
| S8 | Aspheric surface | -8.579276 | 0.629307 | | |
| S9 | | Infinity | 0.900000 | 1.52 | 64.2 |
| S10 | | Infinity | 2.810643 | | |
| S11 | | Infinity | | | |

In this embodiment, parameters of aspherical lenses included in the optical imaging lens 200 are shown in Table 4.

Table 4

| Surface No. | K | B | C | D | E | F |
|---|---|---|---|---|---|---|
| S7 | -1.435650E-01 | -2.806130E-04 | -2.877311E-05 | 3.347955E-07 | 9.641635E-08 | -3.226032E-09 |
| S8 | -2.827599E+00 | 7.092289E-04 | 8.372840E-06 | -5.299949E-06 | 3.845460E-07 | -8.199613E-09 |

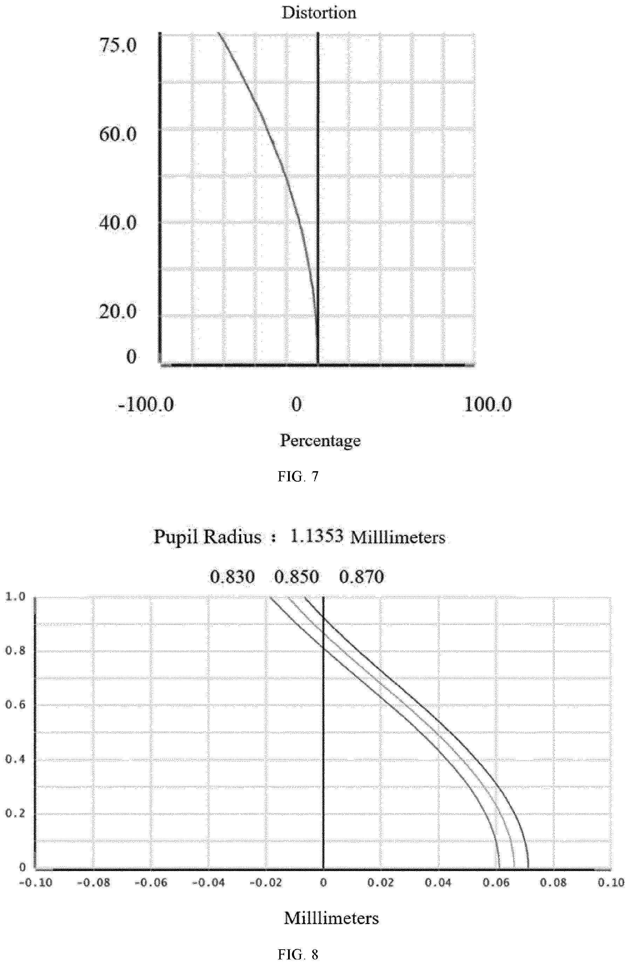

In this embodiment, curves of field curvature, distortion, and axial chromatic aberration of the optical imaging lens 200 are shown in FIG. 6, FIG. 7, and FIG. 8, respectively. In particular, three curves illustrated in FIG. 8, from the negative axis direction to the positive axis direction, respectively correspond to the axial chromatic aberration curves of the optical imaging lens 200 at the wavelength of 830 nm, 850 nm, and 870 nm. From FIG. 6 to FIG. 8, it is apparent that the field curvature, the distortion, and the axial chromatic aberration can be well corrected.

Table 5 shows the above two embodiments and their corresponding optical characteristics. Table 5 includes: the effective focal length (EFL), the field of view (FOV) , the aperture number F#, and the optical total length TTL of the optical imaging lens 100 and 200, and values corresponding to each of the foregoing expressions.

Table 5

| Expression | Embodiment 1 | Embodiment 2 |
|---|---|---|
| TTL (mm) | 14.775 | 15.000 |
| EFL (mm) | 3.209 | 3.179 |
| F# | 1.409 | 1.399 |
| TTL/ImgH | 4.313 | 4.377 |

(continued)

| Expression | Embodiment 1 | Embodiment 2 |
|---|---|---|
| S1/TTL | 0.227 | 0.259 |
| f6/EFL | 1.931 | 2.049 |
| f7/EFL | 2.646 | 3.100 |
| D1/D7 | 0.708 | 0.925 |
| TTL/\|R1\| | 0.223 | 0.15 |
| FOV (°) | 150 | 150 |
| CRA (°) | 12.608 | 1.638 |
| TTL/CT1 | 33.076 | 21.429 |
| TTL/T23 | 7.5 | 11.765 |
| (V 1+V3+V4)/3 | 49.267 | 50.567 |
| $\|\Phi 8\|_{max}$ | 9.871° | 15.320° |
| $\|\Phi 7\|$ | 34.474° | 26.458° |
| SD7 | 4.864 | 4.467 |
| $\|\Phi 7\|-\arctan[SD7/(R7^2-SD7^2)^{1/2}]$ | -11.807° | -8.419° |

The optical imaging lens provided in each of the foregoing embodiments is applicable to the near-infrared waveband, and can form images at night and in dark environments.

Based on the above embodiments, the optical imaging lens provided by the disclosure at least has the following advantages.

(1) The first lens adopts a concave lens with a negative refractive power, it can effectively reduce the distortion of the lens on one hand, and can receive more light into an optical system on the other hand, thereby increasing the luminous flux of incident lights. The second lens adopts a convex lens with a positive refractive power, which is conducive to eliminate aberrations. By reducing a distance between the first lens and the second lens, it facilitates to collect incident lights and eliminate aberrations. By providing a large aperture stop, it can collect more incident lights. By setting the stop between the second lens and the third lens, it can effectively reduce the front diameter of the optical imaging lens. The third lens adopts a meniscus lens with a positive refractive power, which can increase the distance between the second lens and the third lens and is conducive to increase an image height of the field. The first lens and the third lens surround the second lens, a cross section of the image side surface of the first lens and the object side surface of the third lens is in an approximately symmetrical concentric structure, which can effectively correct the distortion. The fourth lens adopts an aspheric lens, on one hand, it can effectively eliminate aberrations of the optical system, correct the distortion and improve the resolution of the optical imaging lens; on the other hand, it can reduce the number of lenses in the optical system and reduce an incident angle of the chief ray on a photosensitive element surface of a chip.

(2) The third lens and the fourth lens are very close, a distance therebetween is very small, even less than 0.5mm. The image side surface of the third lens and the object side surface of the fourth lens are in an approximately symmetrical structure with an externally tangent circle shape, which can effectively increase the maximum image height of the optical system.

(3) The lenses included in the optical imaging lens are all glass lenses. Compared with other optical materials, the glass material has better thermal stability, is capable of maintaining good resolution in high and low temperature environments, and can improve the protective ability of the optical imaging lens and meet the requirements of working in harsh environments.

EMDODIMENT 3

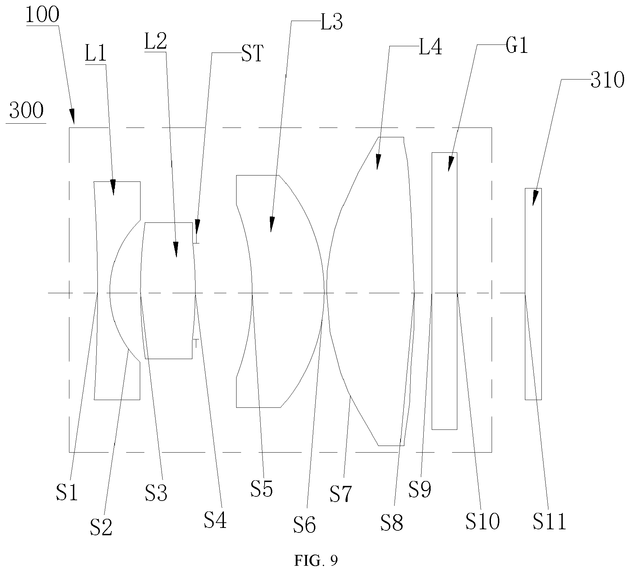

FIG. 9 illustrates a schematic structural diagram of an imaging device 300 provided by this embodiment. The imaging device 300 includes an imaging sensor 310 and the optical imaging lens in any of the foregoing embodiments, e.g., the optical imaging lens 100 of the first embodiment. The imaging sensor 310 can be a Complementary Metal Oxide (CMOS) image sensor or a Charge Coupled Device Semiconductor (CCD) image sensor. The imaging sensor 310 is configured to convert an optical image formed by the optical imaging lens 100 to electrical signals.

The imaging device 300 can be a sport camera, a panoramic camera, a driving recorder, a surveillance camera, or any other form of electronic device equipped with the optical imaging lens 100.

The imaging device 300 provided in this embodiment includes the optical imaging lens 100, due to the optical imaging lens has the advantages of small size, large aperture, high imaging quality, and good thermal stability, the imaging device 300 accordingly has the advantages of small size, large aperture, high imaging quality, and good thermal stability, so that the imaging device 300 can image at night and in dark environments, also can work normally in bad weather.

**Claims**

1. An optical imaging lens (100, 200), the optical imaging lens (100, 200) sequentially consisting of, from an object side to an image plane (S11) along an optical axis:

    a first lens (L1) with a negative refractive power, object side surface (S1) and an image side surface (S2) of the first lens (L1) being both concave;
    a second lens (L2) with a positive refractive power, an object side surface (S3) and an image side surface (S4) of the second lens (L2) being both convex;
    a stop (ST) disposed between the second lens (L2) and a third lens (L3);
    the third lens (L3) with a positive refractive power, an object side surface (S5) of the third lens (L3) being concave, an image side surface (S6) of the third lens (L3) being convex; and
    a fourth lens (L4) with a positive refractive power, an object side surface (S7) and an image side surface (S8) of the fourth lens (L4) being both convex;
    wherein the first lens (L1), the second lens (L2), and the third lens (L3) each are glass spherical lenses, the fourth lens (L4) is a glass aspheric lens, and the optical imaging lens (100, 200) meets the expressions:

$$4.0 < TTL/ImgH < 4.4,$$

$$0.5 < D1/D7 < 1;$$

    where TTL represents a total optical length of the optical imaging lens (100, 200), ImgH represents half of the maximum diameter of an effective pixel area of the image plane (S11) of the optical imaging lens (100, 200), D1 represents an effective diameter of the object side surface (S1) of the first lens (L1), and D7 represents an effective diameter of the object side surface (S7) of the fourth lens (L4).

2. The optical imaging lens (100, 200) of claim 1, wherein the optical imaging lens (100, 200) further meets the expression:

$$0.2 < S1/TTL < 0.3;$$

    where S1 represents a distance from the center of the object side surface (S1) of the first lens (L1) to the stop (ST).

3. The optical imaging lens (100, 200) of claim 1, wherein a distance between the third lens (L3) and the fourth lens (L4) is less than 0.5 mm.

4. The optical imaging lens (100, 200) of claim 1, wherein the image side surface (S6) of the third lens (L3) and the object side surface (S7) of the fourth lens (L4) are in an approximately symmetrical structure with an externally tangent circle shape.

5. The optical imaging lens (100, 200) of claim 1, wherein the optical imaging lens (100, 200) further meets the expression:

$$0.1 < TTL/|R1| < 0.5;$$

where R1 represents a radius of curvature of the object side surface (S1) of the first lens (L1).

6. The optical imaging lens (100, 200) of claim 1, wherein the optical imaging lens (100, 200) further meets the expression:
140°<FOV<160°; where FOV represents the maximum field of view of the optical imaging lens (100, 200).

7. The optical imaging lens (100, 200) of claim 1, wherein the optical imaging lens (100, 200) further meets the expression:
CRA<13°; where CRA represents an incident angle of the chief ray of the maximum field on the image plane (S11).

8. The optical imaging lens (100, 200) of claim 1, wherein the optical imaging lens (100, 200) further meets the expression:

$$20 < TTL/CT1 < 35;$$

where CT1 represents a center thickness of the first lens (L1) on the optical axis.

9. The optical imaging lens (100, 200) of claim 1, wherein the optical imaging lens (100, 200) further meets the expression:

$$7 < TTL/T23 < 12;$$

where T23 represents a distance between the second lens (L2) and the third lens (L3) along the optical axis.

10. The optical imaging lens (100, 200) of claim 1, wherein the optical imaging lens (100, 200) further meets the expression:

$$40 < (V1+V3+V4)/3 < 60;$$

where V1 represents a coefficient of dispersion of the first lens (L1), V3 represents a coefficient of dispersion of the third lens (L3), and V4 represents a coefficient of dispersion of the fourth lens (L4).

11. The optical imaging lens (100, 200) of claim 1, wherein the optical imaging lens (100, 200) further meets the expression:

$$|\Phi 8|_{max} \leqslant 16° ;$$

where $|\Phi 8|_{max}$ represents the maximum value of a dip angle of the image side surface (S8) of the fourth lens (L4).

12. The optical imaging lens (100, 200) of claim 1, wherein the optical imaging lens (100, 200) further meets the expression:

$$-12° \leqslant |\Phi 7| - arctan[SD7/(R7^2 - SD7^2)^{1/2}] \leqslant 12° ;$$

where $|\Phi 7|$ represents the value of a dip angle of the object side surface (S7) of the fourth lens (L4) at effective semi-diameter, SD7 represents the effective semi-diameter of the object side surface (S7) of the fourth lens (L4), and R7 represents a radius of curvature of the object side surface (S7) of the fourth lens (L4).

13. The optical imaging lens (100, 200) of claim 1, further comprising a filter (G1) disposed between the fourth lens (L4) and the image plane (S11), wherein the object side surface (S7) of the fourth lens (L4) and the image side surface (S6) of the third lens (L3) are approximately tangent.

14. The optical imaging lens (100, 200) of claim 1, wherein the optical imaging lens (100, 200) further meets the expressions:

$$RD4 > RD3 > RD2;$$

where RD2 represents an effective diameter of the second lens (L2), RD3 represents an effective diameter of the third lens (L3), RD4 represents an effective diameter of the fourth lens (L4).

15. An imaging device (300), comprising an image sensor (310) and the optical imaging lens (100, 200) of any one of claims 1-14, the imaging sensor (310) being configured to convert an optical image formed by the optical imaging lens (100,200) to electrical signals.

**Patentansprüche**

1. Optische Abbildungslinse (100, 200), wobei die optische Abbildungslinse (100, 200) entlang einer optischen Achse von einer Objektseite zu einer Bildebene (S11) der Reihe nach aus Folgendem besteht:

   einer ersten Linse (L1) mit einem negativen Brechwert, wobei eine objektseitige Oberfläche (S1) und eine bildseitige Oberfläche (S2) der ersten Linse (L1) konkav sind;
   einer zweiten Linse (L2) mit einem positiven Brechwert, wobei eine objektseitige Oberfläche (S3) und eine bildseitige Oberfläche (S4) der zweiten Linse (L2) konvex sind;
   einer Blende (ST), die zwischen der zweiten Linse (L2) und einer dritten Linse (L3) angeordnet ist;
   der dritten Linse (L3) mit einem positiven Brechwert, wobei eine objektseitige Oberfläche (S5) der dritten Linse (L3) konkav und eine bildseitige Oberfläche (S6) der dritten Linse (L3) konvex sind; und
   einer vierten Linse (L4) mit einem positiven Brechwert, wobei eine objektseitige Oberfläche (S7) und eine bildseitige Oberfläche (S8) der vierten Linse (L4) konvex sind;
   wobei die erste Linse (L1), die zweite Linse (L2) und die dritte Linse (L3) jeweils sphärische Glaslinsen sind, während die vierte Linse (L4) eine asphärische Glaslinse ist, wobei die optische Abbildungslinse (100, 200) die folgenden Ausdrücke erfüllt:

$$4,0 < TTL/ImgH < 4,4,$$

$$0,5 < D1/D7 < 1;$$

   wobei TTL für eine gesamte optische Länge der optischen Abbildungslinse (100, 200), ImgH für die Hälfte des maximalen Durchmessers eines effektiven Pixelbereichs der Bildebene (S11) der optischen Abbildungslinse (100, 200), D1 für einen effektiven Durchmesser der objektseitigen Oberfläche (S1) der ersten Linse (L1) und D7 für einen effektiven Durchmesser der objektseitigen Oberfläche (S7) der vierten Linse (L4) stehen.

2. Die optische Abbildungslinse (100, 200) nach Anspruch 1, wobei die optische Abbildungslinse (100, 200) ferner den folgenden Ausdruck erfüllt:

$$0,2 < S1/TTL < 0,3;$$

   wobei S1 für einen Abstand von dem Mittelpunkt der objektseitigen Oberfläche (S1) der ersten Linse (L1) zu der Blende (ST) steht.

3. Die optische Abbildungslinse (100, 200) nach Anspruch 1, wobei ein Abstand zwischen der dritten Linse (L3) und der vierten Linse (L4) weniger als 0,5 mm ist.

4. Die optische Abbildungslinse (100, 200) nach Anspruch 1, wobei die bildseitige Oberfläche (S6) der dritten Linse (L3) und die objektseitige Oberfläche (S7) der vierten Linse (L4) in einer annähernd symmetrischen Struktur mit der Form sich von außen berührender Kreise angeordnet sind.

5. Die optische Abbildungslinse (100, 200) nach Anspruch 1, wobei die optische Abbildungslinse (100, 200) ferner den folgenden Ausdruck erfüllt:

$$0,1 < TTL/|R1| < 0,5;$$

wobei R1 für einen Krümmungsradius der objektseitigen Oberfläche (S1) der ersten Linse (L1) steht.

6. Die optische Abbildungslinse (100, 200) nach Anspruch 1, wobei die optische Abbildungslinse (100, 200) ferner den folgenden Ausdruck erfüllt:
140° < FOV < 160°; wobei FOV für das maximale Bildfeld der optischen Abbildungslinse (100, 200) steht.

7. Die optische Abbildungslinse (100, 200) nach Anspruch 1, wobei die optische Abbildungslinse (100, 200) ferner den folgenden Ausdruck erfüllt:
CRA < 13°; wobei CRA für einen Einfallswinkel des Hauptstrahls des maximalen Felds auf der Bildebene (S11) steht.

8. Die optische Abbildungslinse (100, 200) nach Anspruch 1, wobei die optische Abbildungslinse (100, 200) ferner den folgenden Ausdruck erfüllt:

$$20 < TTL/CT1 < 35;$$

wobei CT1 für eine Mittendicke der ersten Linse (L1) auf der optischen Achse steht.

9. Die optische Abbildungslinse (100, 200) nach Anspruch 1, wobei die optische Abbildungslinse (100, 200) ferner den folgenden Ausdruck erfüllt:

$$7 < TTL/T23 < 12;$$

wobei T23 für einen Abstand zwischen der zweiten Linse (L2) und der dritten Linse (L3) entlang der optischen Achse steht.

10. Die optische Abbildungslinse (100, 200) nach Anspruch 1, wobei die optische Abbildungslinse (100, 200) ferner den folgenden Ausdruck erfüllt:

$$40 < (V1 + V3 + V4)/3 < 60;$$

wobei V1 für einen Dispersionskoeffizienten der ersten Linse (L1), V3 für einen Dispersionskoeffizienten der dritten Linse (L3) und V4 für einen Dispersionskoeffizienten der vierten Linse (L4) stehen.

11. Die optische Abbildungslinse (100, 200) nach Anspruch 1, wobei die optische Abbildungslinse (100, 200) ferner den folgenden Ausdruck erfüllt:

$$|\varphi 8|_{max} \leq 16°;$$

wobei $|\varphi 8|_{max}$ für den maximalen Wert eines Neigungswinkels der bildseitigen Oberfläche (S8) der vierten Linse (L4) steht.

12. Die optische Abbildungslinse (100, 200) nach Anspruch 1, wobei die optische Abbildungslinse (100, 200) ferner den folgenden Ausdruck erfüllt:

$$-12° \leq |\varphi 7| - \arctan[SD7/(R7^2 - SD7^2)^{1/2}] \leq 12°;$$

wobei $|\varphi 7|$ für den Wert eines Neigungswinkels der objektseitigen Oberfläche (S7) der vierten Linse (L4) an effektivem Halbdurchmesser, SD7 für den effektiven Halbdurchmesser der objektseitigen Oberfläche (S7) der vierten Linse (L4) und R7 für einen Krümmungsradius der objektseitigen Oberfläche (S7) der vierten Linse (L4) stehen.

13. Die optische Abbildungslinse (100, 200) nach Anspruch 1, umfassend ferner einen Filter (G1), der zwischen der vierten Linse (L4) und der Bildebene (S11) angeordnet ist, wobei die objektseitige Oberfläche (S7) der vierten Linse (L4) und die bildseitige Oberfläche (S6) der dritten Linse (L3) annähernd tangential verlaufen.

14. Die optische Abbildungslinse (100, 200) nach Anspruch 1, wobei die optische Abbildungslinse (100, 200) ferner die folgenden Ausdrücke erfüllt:
RD4 > RD3 > RD2; wobei RD2 für einen effektiven Durchmesser der zweiten Linse (L2), RD3 für einen effektiven Durchmesser der dritten Linse (L3) und RD4 für einen effektiven Durchmesser der vierten Linse (L4) stehen.

15. Bildgebungsvorrichtung (300), umfassend einen Bildsensor (310) und die optische Abbildungslinse (100, 200) nach einem der Ansprüche 1 bis 14, wobei der Bildsensor (310) zum Umwandeln einer optischen Bildes, das durch die optische Abbildungslinse (100, 200) gebildet wird, in elektrische Signale eingerichtet ist.

**Revendications**

1. Objectif d'imagerie optique (100, 200), l'objectif d'imagerie optique (100, 200) étant constitué successivement, depuis un côté objet jusqu'à un plan d'image (S11), le long d'un axe optique:

d'une première lentille (L1) ayant un pouvoir de réfraction négatif, une surface de côté objet (S1) et une surface de côté image (S2) de la première lentille (L1) étant toutes deux concaves;
d'une deuxième lentille (L2) ayant un pouvoir de réfraction positif, une surface de côté objet (S3) et une surface de côté image (S4) de la deuxième lentille (L2) étant toutes deux convexes;
d'une butée (ST) disposée entre la deuxième lentille (L2) et une troisième lentille (L3);
de la troisième lentille (L3), qui a un pouvoir de réfraction positif, une surface de côté objet (S5) de la troisième lentille (L3) étant concave, une surface de côté image (S6) de la troisième lentille (L3) étant convexe; et
d'une quatrième lentille (L4) ayant un pouvoir de réfraction positif, une surface de côté objet (S7) et une surface de côté image (S8) de la quatrième lentille (L4) étant toutes deux convexes;
la première lentille (L1), la deuxième lentille (L2) et la troisième lentille (L3) étant chacune des lentilles sphériques en verre, la quatrième lentille (L4) étant une lentille asphérique en verre, et l'objectif d'imagerie optique (100, 200) vérifiant les expressions:

$$4,0 < TTL/ImgH < 4,4,$$

$$0,5 < D1/D7 < 1;$$

où TTL représente la longueur optique totale de l'objectif d'imagerie optique (100, 200), ImgH représente la moitié du diamètre maximal d'une superficie de pixels effective du plan d'image (S11) de l'objectif d'imagerie optique (100, 200), D1 représente un diamètre effectif de la surface de côté objet (S1) de la première lentille (L1), et D7 représente un diamètre effectif de la surface de côté objet (S7) de la quatrième lentille (L4).

2. Objectif d'imagerie optique (100, 200) selon la revendication 1, l'objectif d'imagerie optique (100, 200) vérifiant également l'expression:

$$0,2 < S1/TTL < 0,3;$$

où S1 représente une distance entre le centre de la surface de côté objet (S1) de la première lentille (L1) et la butée (ST).

3. Objectif d'imagerie optique (100, 200) selon la revendication 1, dans lequel une distance entre la troisième lentille (L3) et la quatrième lentille (L4) est inférieure à 0,5 mm.

4. Objectif d'imagerie optique (100, 200) selon la revendication 1, dans lequel la surface de côté image (S6) de la troisième lentille (L3) et la surface de côté objet (S7) de la quatrième lentille (L4) ont une structure approximativement symétrique avec une forme circulaire extérieurement tangente.

5. Objectif d'imagerie optique (100, 200) selon la revendication 1, l'objectif d'imagerie optique (100, 200) vérifiant également l'expression:

$$0,1 < \text{TTL}/|\text{R1}| < 0,5;$$

où R1 représente un rayon de courbure de la surface de côté objet (S1) de la première lentille (L1).

6. Objectif d'imagerie optique (100, 200) selon la revendication 1, l'objectif d'imagerie optique (100, 200) vérifiant également l'expression:

$$140° < \text{FOV} < 160°;$$

où FOV représente le champ de vision maximal de l'objectif d'imagerie optique (100, 200).

7. Objectif d'imagerie optique (100, 200) selon la revendication 1, l'objectif d'imagerie optique (100, 200) vérifiant également l'expression:
CRA < 13°; où CRA représente un angle incident du rayon principal du champ maximal sur la plan d'image (S11).

8. Objectif d'imagerie optique (100, 200) selon la revendication 1, l'objectif d'imagerie optique (100, 200) vérifiant également l'expression:

$$20 < \text{TTL}/\text{CT1} < 35;$$

où CT1 représente une épaisseur centrale de la première lentille (L1) sur l'axe optique.

9. Objectif d'imagerie optique (100, 200) selon la revendication 1, l'objectif d'imagerie optique (100, 200) vérifiant également l'expression:

$$7 < \text{TTL}/\text{T23} < 12;$$

où T23 représente une distance entre la deuxième lentille (L2) et la troisième lentille (L3) le long de l'axe optique.

10. Objectif d'imagerie optique (100, 200) selon la revendication 1, l'objectif d'imagerie optique (100, 200) vérifiant également l'expression:

$$40 < (\text{V1}+\text{V3}+\text{V4})/3 < 60;$$

où V1 représente un coefficient de dispersion de la première lentille (L1), V3 représente un coefficient de dispersion de la troisième lentille (L3), et V4 représente un coefficient de dispersion de la quatrième lentille (L4).

11. Objectif d'imagerie optique (100, 200) selon la revendication 1, l'objectif d'imagerie optique (100, 200) vérifiant également l'expression:

$$|\varphi 8|_{\text{max}} \leq 16°;$$

où $|\varphi8|_{max}$ représente la valeur maximale d'un angle d'inclinaison de la surface de côté image (S8) de la quatrième lentille (L4).

12. Objectif d'imagerie optique (100, 200) selon la revendication 1, l'objectif d'imagerie optique (100, 200) vérifiant également l'expression:

$$-12° \leq |\varphi7|-\arctan[SD7/(R7^2 - SD7^2)^{1/2}] \leq 12°;$$

où $|\varphi7|$ représente la valeur d'un angle d'inclinaison de la surface de côté objet (S7) de la quatrième lentille (L4) au demi-diamètre effectif, SD7 représente le demi-diamètre effectif de la surface de côté objet (S7) de la quatrième lentille (L4), et R7 représente un rayon de courbure de la surface de côté objet (S7) de la quatrième lentille (L4).

13. Objectif d'imagerie optique (100, 200) selon la revendication 1, comprenant également un filtre (G1) disposé entre la quatrième lentille (L4) et le plan d'image (S11), la surface de côté objet (S7) de la quatrième lentille (L4) et la surface de côté image (S6) de la troisième lentille (L3) étant approximativement tangentes.

14. Objectif d'imagerie optique (100, 200) selon la revendication 1, l'objectif d'imagerie optique (100, 200) vérifiant également les expressions:
RD4 > RD3 > RD2; où RD2 représente un diamètre effectif de la deuxième lentille (L2), RD3 représente un diamètre effectif de la troisième lentille (L3), RD4 représente un diamètre effectif de la quatrième lentille (L4).

15. Dispositif d'imagerie (300), comprenant un capteur d'image (310) et l'objectif d'imagerie optique (100, 200) selon l'une quelconque des revendications 1 à 14, le capteur d'image (310) étant configuré pour convertir une image optique formée par l'objectif d'imagerie optique (100,200) en signaux électriques.

FIG. 1

FIG. 2

Distortion

FIG. 3

Pupil Radius : 1.1396 Millimeters

0.830    0.850    0.870

FIG. 4

FIG. 5

FIG. 6

Distortion

FIG. 7

Pupil Radius : 1.1353 Milllimeters

0.830  0.850  0.870

Milllimeters

FIG. 8

FIG. 9

**EP 3 835 844 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209327661 U